# EUROPEAN PATENT APPLICATION

(11) **EP 0 816 827 A2**
(43) Date of publication of application: **07.01.1998**
(21) Application number: 97201914.5
(22) Date of filing: 23.06.1997
(51) Int. Cl.: G01N 21/03, B01L 3/00

(54) **A multiwell arrangement for instrumental analysis**

(30) Priority: 24.06.1996 US 668937
(71) Applicant: Schweizerische Eidgenossenschaft vertreten durch das AC-Laboratorium Spiez der Gruppe für Rüstungsdienste, CH-3700 Spiez (CH)
(72) Inventor: Portmann, Rudolf, Dr., 3000 Bern (CH)
(74) Representative: Frauenknecht, Alois J.

(57) **Abstract**

An improved multiwell arrangement for instrumental analysis is designed for universal use for at least temporarily liquid samples.

The so called microtiter plate uses materials of different physical properties, chosen depending on the sample to be analysed to form at least approximately a planar sample surface.

At least the walls (1) consist of light absorbing material and/or of radiation shielding materials and/or of scintillation substances incorporated into the polymers building the walls (1) and the bottoms (2).

To reuse the titer plate (11) an inlay (30) is inserted like an overgarment into the wells (11). To improve measurement, the inlay (30) is covered on its outer side with a reflector (31). Preferably the reflector (31) is at least partially of shperic parabolic shape.

## Description

The invention relates to a multiwell arrangement as in preamble of claim 1.

Titer plates, particularly microtiter plates, are increasingly used in the instrumental analysis of samples. When conventional methods with photometric detection are used, e.g. ELISA tests (Enzyme Linked Immunosorbent Assay), the determination of concentration of chemicals, the evaluation of α-β-, and/or γ- radiation by scintillation, and the measurement of fluorescence, phosphorescence or luminescence, etc., these are often hampered and consequently yield falsified results.

The main reason for the falsified analysis results is a meniscus which forms on the surface of mostly polar liquid samples. It is well known that the formation of a meniscus is due to surface and interfacial tensions. As a consequence of the wettability of the surface contacted by the liquid, the meniscus can be either convex or concave.

Another source for the erroneous deviation from the proper result arises if the microtiter plates are moulded from a transparent material, in which case the walls act as light conductors. Some wells often show higher intensities of light, as the light rays penetrate from neighboring wells.

This problem is solved by an arrangement of different materials in a titer plate according to EP -A1- 0 648 536.

The evaluation of toxicity of liquid solutions by semiautomatic assay, as described in WO 95/25955, uses small organisms like artemia. These can be assayed in microtiter plates known from EP -A1- 0 648 536. The analysis exhibits a proper image formed by trans-illumination. Since an ideal image, analysable by means of a video camera results only form the equally illuminated well with no surface deterioration.

Further, in case of radioactive radiation, this penetrates into the next wells and these too, show a higher radioactivity than actually present. This applies especially to the determination of isotopes which give rise to high energy radiation, like in the case of ³²P. To avoid this problem of erroneous, too high analysis results, the cross talk is corrected by calibration during the measurement. If the detector is located just above the well being measured, the influence of the geometry of the liquid surface shaped by the meniscus causes deviation from the proper result.

The same problem arises in scintillation measurements as well.

Particularly high errors in measurement result when samples contain different concentration levels of substances leading to fluorescence, luminescence, phosphorescence and scintillation.

It is therefore the object of the present invention to create a multiwell arrangement, which prevents or reduces to an acceptable level, the formation of an interfering meniscus on the liquid surface, and/or prevents the cross talk and cross irradiation in scintillation counting, measurement of fluorescence, phosphorescence, luminescence and in radio-toxicity assays, while not appreciably absorbing the radiation during instrumental analysis, and/or influencing the radiation path.

It is another object of the invention to increase detectability of low level radiation of samples.

In practice the titer plate could be universal, e.g. should be applicable for nearly every instrumental analysis method according to the state of the art.

This object is attained according to the features of claim 1.

In the dependent claims preferential developments and improvements of the invented item are described.

Walls consisting of light absorbing material prevent cross talk between wells, especially when optical detection means are used.

The integration of substances with cubic face centered crystal structure, preferably with a density above 1.5, and known radioactivity absorbing or shielding substances into the walls and/or bottoms of the wells, reduces or prevents cross talk in radioactive measurements.

The integration of scintillation substances into the material of the titer plate allows the elimination of addition of same into each sample being measured, thus reducing the analysis preparation time.

Particle size of the additives may range from 200 µm to 5 µm.

The method of compounding of such additives is *per se* known from the plastic industry.

Transparent or opaque bottoms are favorable for optical analyses.

An inlay may reduce manufacturing costs and allows multi reuse of same titer plate. Since the indentations of the inlay may be of different sizes, these inlays may be used for different sized samples over one size of titer plate. If the inlay is used for samples of lesser volume, and thus is not fully supported by the walls of the wells, but is only placed over the titer plate, it has to be of a form stable material with rigid dimensions.

The inlay is mounted like an overgarment onto the titer plate.

An additional layer to cover the inlay, can be tailor made according to the conditions of measurement.

Layers acting as reflectors enhance the radiation of weak samples during measurement.

Metallic reflecting materials, can be easily deposited on a film like material with methods known in the art.

A layer of spherical or paraboloid shape focuses the radiation and allows easier and more accurate measurement.

A prefered embodiment of the invention is based on the titer plate designed according to EP -B1- 0 648 536. Therefore only modifications and improvements are described here in detail.

In the following description the objects and features of the invention will be explained in more detail, and may be reviewed in conjunction with the annexed drawings, in which:
- Fig. 1: is a magnified presentation of a partial sectional view through a multiwell arrangement and
- Fig. 2: is a partial sectional view through the further detailing the structure of the present invention and shows an additional inlay in one well with special features.

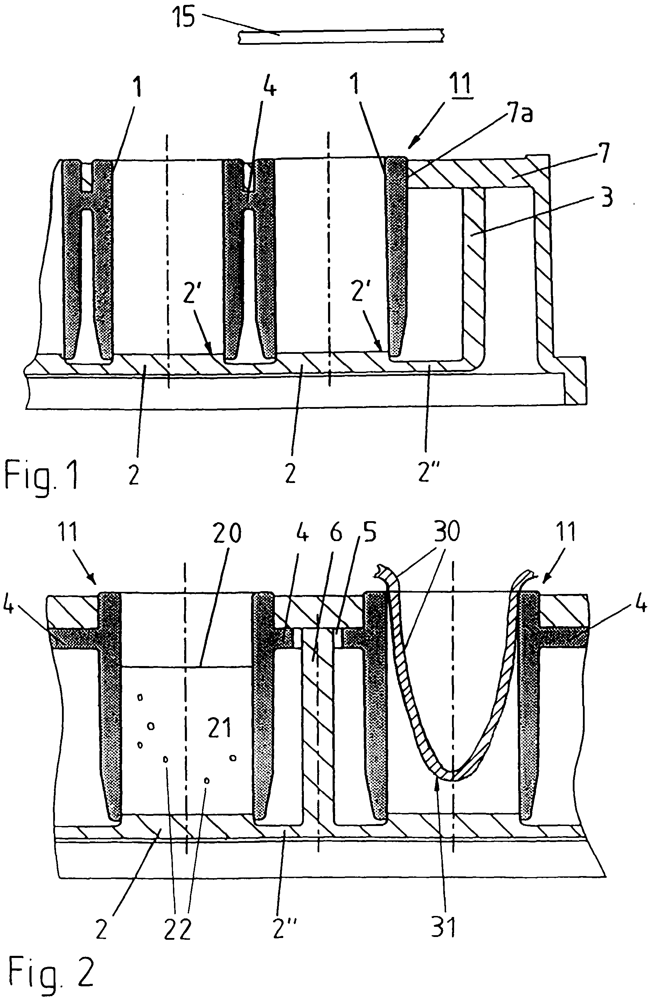

The partial view of Fig. 1 belongs to a titer plate configured in accordance with the teachings of EP -B1- 0 648 536.

A multi-well titer plate assembly is shown having an array of 96 individual wells 11. Each well includes a well bottom 2 preferably formed as part of a plate or sheet-like bottom plate structure 2'', and an upstanding cylindrical wall 1, which may be similarly formed as part of a multi-well forming element. The array of well bottoms lie in a common plane. A series of vertical distance-gauging elements or shafts 6 extend upwardly from the bottom plate 2'', and are aligned with spigot holes 5, see Fig. 2.

An overlaying frame cover 7 includes holes 7a for the upper end of the well walls 1. The well bottoms are typically transparent, and, along with the walls, may be provided at least partially with a surface adapted to adsorb the samples to be placed therein, as known in the art. For liquid scintillation counting, as well as for RIA (Radio- Immuno- Assay) and fluorescence or phosphorescence assay it may be desirable to form the bottom plate of opaque materials. The walls too, may be provided at least partially with a surface adapted to adsorb the samples to be placed therein, as known in the art. The frame cover 7 further includes supports and guide webs in the form of edge straps. The frame cover exterior is provided with opposed grip areas positioned above a peripheral supporting lower rim or web.

The frame cover 7 is further supported by its peripheral wall surrounding supporting rim in a manner whereby an upstanding well wall 1 is embraced in a friction fit by the hole 7a. Each of the wells 11 is aligned with a hole 7a, each well wall further surrounding and enclosing one of the plug-like elevations 2 which are arranged on the base plate 2''. The walls 1 project through the frame cover 7, through the holes 7a.

Figures 1 and 2 present the elements of the construction in detail. As seen therein, a connecting web 4 is provided between the well walls 1 and allows a plurality of well walls to be formed as a unitary element. The height of the well walls 1 is chosen such that the lower face of the walls are not directly touching the base, the bottom plate 2'' and protrude only slightly above the frame cover 7 through its hole 7a. The plugs or elevations 2' are formed as integral raised portions upon the bottom plate 2'', and define the bottoms 2 for the wells.

The elevations are peripherally sealed by the well walls 1 to form the liquid tight wells. It can be seen that the lower portion of the walls 1 receive an outside cone-shaped taper to obtain an additional desired elasticity or suppleness at such a lower end zone, permitting a snug fit about the elevations 2' to be obtained. The bottom plate 2'' is surrounded by an upturned lip or border 3 and forms a generally box-shaped peripheral supporting dish or shell, the border 3 simultaneously serving as a distance defining element or spacer for the frame cover 7, as depicted in the right region of Fig. 1, assisting in the positioning and alignment of the cover allows the bottom plate 2'' to be supported above the surface upon which the frame cover sits.

As seen in Fig. 2, the wall assembly 11 with wall elements 1, joined by the connector or web 4, is guided during its mounting onto the associated elevations 2 by a series of spigot holes 5 located in the centers of the connecting pieces or webs 4 mating with the spigot shaft/distance elements 6 extending upwardly from the bottom plate 2''.

By aligning the top ends of the shafts with the top surfaces of the web 4 the shafts serve to properly space the frame cover 7 from the bottom plate 2'', since the frame cover is supported in a frictional fit with the tops of the well walls 1.

Also depicted in Fig. 1, above the assembly 11, is a protective cover 15 which, by the design of its border, is configured to be mounted only in one orientation onto the assembly. With single orientation, the cover can be provided with indicia to identify the wells. Alternatively, the walls 1 or the webs 4, Fig. 2, between the wells 11 can be marked as desired.

Preferred construction materials are commercially available polystyrene (type BASF SB 475K) for the bottom plate and polypropylene (type BASF PP 1324M or polypropylene type BASF PP 1325L) for the walls of the wells. For the frame cover 7, polystyrene (type BASF PS 144C) gave satisfactory results.

In the case of opaque bottom plate, the same construction material as for the frame cover 7, gave adequate results. For the wall with radiation absorbing material, a compound thermoplast consisting of e.g. one of the above mentioned polypropylenes with the addition of an appropriate amount of lead powder. A preferred material is lead powder of an average particle size of 100 µm (FLUKA AG, Switzerland).

All parts were manufactured by commonly known injection moulding. Such apolar materials allow aqueous (polar) samples, such as the liquid sample 21 containing organisms 22 as depicted in Fig. 2, to have a planar top surface 20 allowing for improved observation and analysis.

In mounting the well walls 1 it is preferred to use expanding mandrels, as known in the art, to allow the well walls to be slid over the elevations 2' without interference. This allows a tight connection to be formed without the use of glues or laborious welding techniques. The technique can be used to join a variety of so called "unconnectable" plastics and other materials. Alternatively, heat expansion can be used during mounting or direct moulding on to the bottom plate.

Using materials of the type set forth above, a well layout for aqueous salt test solutions comprising 405.0 mM NaCl, 18.9 mM MgSO₄*7H₂O, 16.4 mM MgCl₂*6H₂O, 7.3 mM CaCl₂*2H₂O, 1.59 mM NaHCO₃ and 6.65 mM KCl were constructed with an overall size of 125 x 80 mm and a height of 15 mm. The wells were of 8.5 mm outer diameter and 7 mm inside diameter with a depth (height) of 9.5 mm. The construction materials were evaluated for meniscus formation using a known method of video observation in the transmission mode. No meniscus was observed as being formed through 48 hours, using the above mentioned aqueous salt solution.

It may be necessary in certain circumstances to sterilize the arrangement, and in particular the wells, using appropriate irradiation techniques. When γ-irradiation is used, it is recommended that the walls be made of material resistant to such radiation e.g. polypropylene (BOREALIS HD 810 P, supplier Borrealis SA, Geneva/Switzerland).

With transparent well bottoms, the invention has particular utility and value in conjunction with video observations and analysis in the transmission mode, wherein a video camera is preferably mounted bellow the bottoms of the wells.

Shadow and contrast problems as encountered with common titer plates can be completely eliminated.

For the construction of radiation absorbing well walls first a calculation of the geometric radiation factor was undertaken. This was done with the same dimensions of the wells as mentioned above: 8.5 mm outer diameter, 7 mm inside diameter and a depth (height) of 9.5 mm. The distance of the two closest adjacent well centers is 9.25 mm, whereas the distance of the two neighboring wells located on the diagonal is 13.08 mm. Assuming that the radioactivity is concentrated in the center of one well, and that the radiation is equally distributed in all directions and forms a sphere, one can estimate the percentage of the total radiation which reaches the next well. In this approximation the changing wall thickness, towards wall base, was not taken into account, to be on the safe side. For the well with the shortest distance this estimation results in 8.3 %; for the well placed over the diagonal 3.9 %. This means that at most 8.3 % of the total radio-activity of β-radiation would reach the neighboring well as cross talk.

For α-radiation one can assume that no cross talk would take place, since α-radiation is not penetrating and would be absorbed by the well wall.

³²P has one of the most energetic β-radiations of 1.7 MEV, among all β-emitting isotopes, which are normally used in biological applications. Therefore this was taken to measure the shielding effect of the well walls compounded with different materials.

As radiation absorbing materials, cubic face centered crystalls were implemented. It is known that the radiation absorbing capacity of material shows an almost linear relationship with the density of the material. Therefore a compound material containing aluminium powder, or copper powder or lead powder was used to test the efficacy in radiation protection against a ³²P-source.

Characteristic results obtained with an epoxide therm set (duroplast) compounded with radiation absorbing material are reported below:

The unshielded ³²P radiation source showed 1750 counts per second (cps). After shielding the source with one layer of 0.75 mm thick compound duroplast (corresponding to the well wall thickness) containing 30 v/v % of aluminium powder of less than 160 µm in particle size, the measured activity dropped to 460 cps. With two layers of the same material only 250 cps were measured. This corresponds to a shielding factor of 3.8 and 7 respectively, for the double layer.

With 30 v/v % copper powder of less than 63 µm in particle size, admixed into the same thermo set, 165 cps for the single layer, and 35 cps for the double layer were measured. This results in a shielding factor of 11 and 50 respectively, for the double layer.

Results obtained with different volume percentages of lead powder of less than 100 µm in particle size, added to the same thermo set, are summarized below:

| Vol.% Pb | cps over well 1 | cps over well 2 | shield. of 1 layer | shield. of 2 layers |
|---|---|---|---|---|
| 10 | 180 | 45 | 9.5 | 39 |
| 15 | 105 | 20 | 17 | 87 |
| 20 | 75 | 9 | 23 | 190 |
| 25 | 50 | 7 | 35 | 250 |
| 30 | 43 | 3 | 40 | 580 |

These results clearly indicate that a significant shielding effect is obtained by using a compound plastic for manufacturing the walls. Since the powder is completely surrounded by the plastic, the surface characteristics stay the same as of the original material.

With transparent well bottoms, and the appropriate shielding of the well walls, the invention has particular utility and value in conjunction with video observation and analysis in the transmission mode. This assembly can be used for radio-toxicity assays with none or minute interference from the neighboring wells. Shadow and contrast problems as encountered with common titer plates can be completely eliminated by the present invention. With opaque well bottoms and the appropriate shielding of the well walls, the invention has preferred utility and value in liquid scintillation counting and RIA analysis, when the detector is placed above the plates. This assembly with the appropriate shielding well walls can be used for measuring radioactivity with none or minute interference from the neighboring wells.

A sheet or film-like inlay cover or "overgarment" having formed indentations or cavities may be used in conjunction with the plate. The inlay contains solid scintillators like NaI(Tl), CsI(Tl), CsI(Na), Bismuth Germanate (BGO), Cadmium Tungstate (CdWO₄), ZnS(Ag), CaF₂, Yttrium Silicates, etc.). The use of the inlay is to prevent contamination of the plate and allows to count with these so called plastic scintillators α-, β-, and γ- radiation, with a minimum of waste.

For scintillation counting of mostly polar liquids an apolar thermoplast with the addition of a radiation absorbing material is used for the well walls. For the bottom of the wells either an opaque material containing solid scintillators NaI(Tl), CsI(Tl), CsI(Na), Bismuth Germanate (BGO), Cadmium Tungstate (CdWO₄), ZnS(Ag), CaF₂, Yttrium Silicates, etc. are used. This has the advantage that α-, β-, and γ- radiation can be counted and that the waste of solvents, containing organic compounds is reduced.

Of course the inlay 30 can be formed in an appropriate manner, as illustrated on the right side in Fig. 4. In this case, the inlay 30 is made of innert material, whereas an outer layer 31, made of polished aluminium, is deposited in vacuuo, and acts as reflector.

Layers acting as reflectors enhance the radiation of weak samples during measurement, further, spherical or paraboloid shaped layers focuse the radiation and allow easier and more accurate measurement. Thus even radiation spectra might be measured, or the radiation dosis of the sampled species could be evaluated.

The paraboloid can be optimized with respect to the measurement method, e.g. to suit the geometric form of the probe.

In a preferred embodiment, sub-assemblies having a plurality of well walls are mounted upon a base plate and elevation unit to form a large-scale multi-element plate system. The assemblies are provided with holes or apertures through which indexing spigot shafts extend to align and mount the sub-assemblies to a base plate element.

The following is a list of polymeres which were successefully used for the manufacture of titer plates according to the invention:

The well wall material was chosen from the groups of polyolefines or polytetrafluoroethylenes, polystyrene, polystyrene co-polymeres, polymethylmethacrylate, polycarbonate, polyethersulfone, polysulfone, polymethylpentene, styreneacrylnitrile, amorphous polyamide and polyethylenetherephthalate.

For the bottoms of the wells, polystyrene, polystyrene co-polymeres, polymethylmethacrylate, polycarbonate, polyethersulfone, polysulfone, polymethylpentene, styreneacrylnitrile, amorphous polyamide and polyethylenetherephthalate, polyolefines or polytetrafluoroethylenes were chosen.

For the inlay or overgarment, the following thermoplasts which can be vacuum formed, such as polyolefine, polyvinyl chloride, polystyrene, polymethylacrylate, polyamide, polyacetate, polyalkylenetherephthalate, polycarbonate, polyphenyleneoxide, polysulfone, polyphenylsulfide, polyimide, polyaryletherketone, fluorinated polymers, thermoplastic elastomers, or liquid crystal polymers were chosen.

## Claims

1. A multiwell arrangement for instrumental analyses using optical and/or radiation detectors, of at least temporarily liquid samples, wherein materials of different physical properties are used for the well walls and the well bottoms, whereas the material for the well walls is chosen in such a manner, that depending on the sample to be analysed, the interfacial tension resulting between the sample and the wall forms at least approximately a planar sample surface, characterized in that the walls (1) and/or the bottoms (2) of the wells (11) consist of light absorbing materials and/or of radiation shielding materials, and/or of scintillation substances, all incorporated into the polymeres building the multiwell arrangement.

2. A multiwell arrangement according to Claim 1, characterized in that at least the walls (1) of the wells (11) contain light absorbing materials, such as titanium dioxide, carbon black or graphite.

3. A multiwell arrangement according to Claim 1, characterized in that at least the walls (1) of the wells (11) contain cubic face centered, radioactivity absorbing, crystaline substances, such as aluminium, copper and lead.

4. A multiwell arrangement according to Claim 1, characterized in that at least the walls (1) of the wells (11) contain scintillation substances, such as powdered rare earths metal silicates, like yttrium silicate.

5. A multiwell arrangement according to Claim 1, characterized in that the bottoms (2) of the wells (11) are transparent or opaque.

6. A multiwell arrangement according to at least one of the Claims 1 to 5, characterized in that a form stable, film like inlay (30) is inserted in at least one of the wells (11).

7. A multiwell arrangement according to Claim 6, characterized in that the inlay (30) is at least partially covered on its inner and/or outer surface with an additional layer (31) having different physical properties.

8. A multiwell arrangement according to Claim 7, characterized in that the layer (31) is a reflector for radiation.

9. A multiwell arrangement according to Claim 8, characterized in that the layer (31) is made of aluminium, chromium, silver, mercury or gold.

10. A multiwell arrangement according to at least one of the Claims 7 to 9, characterized in that the layer (31) is, at least in its lower part, spherical or paraboloid in shape.
